# EUROPÄISCHE PATENTSCHRIFT

(11) **EP 3 416 019 B1**
(45) Veröffentlichungstag und Bekanntmachung des Hinweises auf die Patenterteilung: **28.04.2021**
(21) Anmeldenummer: 18176980.3
(22) Anmeldetag: 11.06.2018
(51) Int. Cl.: G05D 1/02, A47L 11/10

(54) **SYSTEM MIT MINDESTENS ZWEI SICH SELBSTTÄTIG FORTBEWEGENDEN BODENBEARBEITUNGSGERÄTEN**
SYSTEM COMPRISING AT LEAST TWO AUTOMATIC ADVANCING GROUND WORKING TOOLS
SYSTÈME POURVU D'AU MOINS DEUX APPAREILS DE TRAITEMENT DU SOL AUTOMATIQUE

(30) Priorität: 16.06.2017 DE 102017113286
(43) Veröffentlichungstag der Anmeldung: 19.12.2018
(73) Patentinhaber: Vorwerk & Co. Interholding GmbH, 42275 Wuppertal (DE)
(72) Erfinder: Hackert, Georg, 44869 Bochum (DE); Helmich, Martin, 47055 Duisburg (DE); Hillen, Lorenz, 42287 Wuppertal (DE); Holz, Christian, 44137 Dortmund (DE); Isenberg, Gerhard, 50668 Köln (DE); Koetz, Hendrik, 58300 Wetter (DE); Mosebach, Andrej, 44809 Bochum (DE); Ortmann, Roman, 47057 Duisburg (DE); Dulinski, Robin, 42283 Wuppertal (DE)
(74) Vertreter: Müller, Enno

(56) Entgegenhaltungen:
- WO-A1-2017/073955
- US-A1- 2009 012 667
- US-A1- 2009 198 376
- US-B1- 9 307 368

## Beschreibung

### Gebiet der Technik

Die Erfindung betrifft ein System nach Anspruch 1.

Des Weiteren betrifft die Erfindung ein Verfahren nach Anspruch 5.

### Stand der Technik

Sich selbsttätig fortbewegende Bodenbearbeitungsgeräte sind im Stand der Technik hinreichend bekannt. Des Weiteren ist es bekannt, zwei oder mehr dieser Bodenbearbeitungsgeräte zu einem System zu verbinden, so dass diese in Bezug auf ihren Betrieb interagieren.

Bodenbearbeitungsgeräte der vorgenannten Art sind insbesondere autonome Bodenbearbeitungsroboter, wie beispielsweise Reinigungsroboter zum Saugen, Wischen, Polieren, Schleifen und/oder Rasen mähen. Jedes Bodenbearbeitungsgerät weist eine Navigations- und Selbstlokalisierungseinrichtung auf, welche Umgebungsdaten detektiert und zu einer Umgebungskarte verarbeitet.

Die Veröffentlichungen DE 10 2011 000 536 A1 und DE 10 2008 014 912 A1 zeigen beispielsweise selbsttätig verfahrbare Reinigungsroboter zur Reinigung von Fußböden. Die Reinigungsroboter sind bevorzugt mit Abstandssensoren ausgestattet, welche Abstände zu Hindernissen messen. Aus den gemessenen Abstandsdaten wird eine Umgebungskarte erstellt, anhand welcher eine Fortbewegungsroute des Reinigungsroboters geplant werden kann. Die Abstandssensoren arbeiten beispielsweise berührungslos mit Hilfe von Licht und/oder Ultraschall. Des Weiteren ist es bekannt, einen Reinigungsroboter mit Mitteln zur Rundum-Abstandsmessung zu versehen, beispielsweise in Form eines optischen Triangulationssystems, welches auf einer um eine Vertikalachse rotierenden Plattform oder dergleichen angeordnet ist. Die erfassten Abstandsdaten werden mittels der Navigations- und Selbstlokalisierungseinrichtung zu einer Umgebungskarte verarbeitet und in einem in den Reinigungsroboter integrierten Speicher gespeichert, so dass im Zuge eines Arbeitsbetriebs des Reinigungsroboters auf diese Umgebungskarte zurückgegriffen werden kann.

Die Veröffentlichungen WO 2017/073955 A1 und US 2009/198376 A1 offenbaren, dass eine in einem Speicher für den Zugriff durch mehrere Bodenbearbeitungsgeräte gespeicherte Umgebungskarte aktualisiert wird, wenn eine neue Version einer Umgebungskarte vorliegt

Weiterer gattungsbildender Stand der Technik stellen die Druckschriften US 2009/012667 A1 und US9307368 B1 dar.

Sofern mehrere sich selbsttätig fortbewegende Bodenbearbeitungsgeräte innerhalb der gleichen Umgebung verwendet werden, ist es in Abhängigkeit von den jeweiligen gemessenen Umgebungsdaten, der Art der verwendeten Detektionseinrichtung oder anderen Parametern der jeweiligen Navigations- und Selbstlokalisierungseinrichtung des jeweiligen Bodenbearbeitungsgerätes möglich, dass die Bodenbearbeitungsgeräte des Systems über voneinander abweichende Umgebungsdaten verfügen.

### Zusammenfassung der Erfindung

Ausgehend von dem vorgenannten Stand der Technik ist es daher Aufgabe der Erfindung, ein System aus mehreren sich selbsttätig fortbewegenden Bodenbearbeitungsgeräten weiterzuentwickeln, insbesondere dahingehend, dass die Bodenbearbeitungsgeräte vorteilhaft zusammenarbeiten und sich unterstützen.

Zur Lösung der vorgenannten Aufgabe wird ein System mit mindestens zwei Bodenbearbeitungsgeräten vorgeschlagen, dessen Recheneinrichtung ausgebildet ist, anhand eines definierten Auswahlkriteriums festzulegen, welche der Umgebungskarten in der gemeinsamen Speichereinrichtung und/oder in einem lokalen Speicher eines Bodenbearbeitungsgerätes gespeichert wird, wobei das Auswahlkriterium eine Detailtiefe der Umgebungskarte ist, nämlich eine Dimension der Umgebungskarten und/oder eine Darstellung der Umgebung mit einer Angabe einer Höhe durch farbliche Codierung.

Erfindungsgemäß wird vorgeschlagen, dass das Auswahlkriterium ein Parameter der Umgebungskarte ist, nämlich eine Detailtiefe der Umgebungskarte. Dabei erfolgt die Entscheidung für eine von mehreren Umgebungskarten als gemeinsame Umgebungskarte nach der Regel, dass immer eine Umgebungskarte als gemeinsame Umgebungskarte gespeichert wird, die die größere Detailtiefe aufweist. Beispielsweise weist eine erste Umgebungskarte nur eine zweidimensionale Darstellung der Umgebung auf, während eine zweite Umgebungskarte eine dreidimensionale Darstellung, oder eine zweidimensionale Darstellung mit Zusatzinformationen bietet. Die Zusatzinformationen können beispielsweise die Angabe einer Höhe durch farbliche Codierung oder dergleichen beinhalten.

Die Bodenbearbeitungsgeräte des Systems wirken so zusammen, dass diese ihre Umgebungskarten einem anderen Bodenbearbeitungsgerät zur Verfügung stellen. Dadurch ist es möglich, dass die Bodenbearbeitungsgeräte des Systems ihre Bodenbearbeitungstätigkeit jeweils auf das andere Bodenbearbeitungsgerät anpassen können. Durch die Nutzung einer gemeinsamen Umgebungskarte ist es möglich, dass Umgebungsdaten eines der Bodenbearbeitungsgeräte von einem anderen Bodenbearbeitungsgerät nachvollzogen werden können. Dadurch werden eine Fehlinterpretation und eine möglicherweise an falscher Stelle erfolgende Bodenbearbeitungstätigkeit vermieden. Insbesondere ist dies vorteilhaft, wo beispielsweise zwei Bodenbearbeitungsgeräte mit gleichen oder unterschiedlichen Bearbeitungsfähigkeiten zusammenarbeiten und beispielsweise ein erstes Bodenbearbeitungsgerät eine Aufgabe von einem zweiten Bodenbearbeitungsgerät übernimmt oder dessen Bodenbearbeitungstätigkeit fortsetzt. Die Recheneinrichtung des Systems, welche der gemeinsamen Speichereinrichtung zugeordnet ist, ist ausgebildet, die verschiedenen Umgebungskarten der Bodenbearbeitungsgeräte zu vergleichen und eine der Umgebungskarten auszuwählen, welche vorzugsweise von allen Bodenbearbeitungsgeräten des Systems zu verwenden ist. Sofern unterschiedliche Umgebungskarten innerhalb des Systems existieren, beispielsweise innerhalb eines lokalen Speichers eines ersten Bodenbearbeitungsgerätes, innerhalb eines lokalen Speichers eines zweiten Bodenbearbeitungsgerätes und innerhalb einer gemeinsamen Speichereinrichtung des Systems, ermittelt die Recheneinrichtung anhand des Auswahlkriteriums diejenige Umgebungskarte, welche von allen Geräten des Systems zu verwenden ist. Zu diesem Zweck kann die Recheneinrichtung ausgebildet sein, eine bestimmte Umgebungskarte als Masterkarte festzulegen. Durch diese Umgebungskarte werden andere Umgebungskarten des Systems, welche beispielsweise in einem lokalen Speicher der Bodenbearbeitungsgeräte vorhanden sind, vorzugsweise überschrieben. Somit wird sichergestellt, dass die Bodenbearbeitungsgeräte des Systems auf einem gleichen Kenntnisstand bezüglich der Umgebungsdaten sind. Beispielsweise können so auch Umgebungsdaten aus unterschiedlichen Teilbereichen der Umgebung zusammengeführt werden, so dass eine Gesamtkarte einer Wohnung erstellt werden kann und alle Bodenbearbeitungsgeräte, auch solche, welche in einigen Teilbereichen der Umgebung noch keine Umgebungsdaten detektiert haben, auf alle Umgebungsdaten zugreifen können. Um eine bestimmte Umgebungskarte des Systems festzulegen, welche für mehrere Bodenbearbeitungsgeräte, oder vorzugsweise alle Bodenbearbeitungsgeräte, des Systems zu verwenden ist, werden die Umgebungskarten miteinander verglichen und anhand eines oder mehrerer definierter Auswahlkriterien evaluiert, wobei eine solche Umgebungskarte als Masterkarte festgelegt wird, die die definierten Auswahlkriterien am besten erfüllt. Dabei kann eine Umgebungskarte eines ersten Bodenbearbeitungsgerätes mit einer Umgebungskarte eines zweiten Bodenbearbeitungsgerätes verglichen werden und anhand der definierten Auswahlkriterien entschieden werden, welche der Umgebungskarten in der gemeinsamen Speichereinrichtung des Systems als Masterkarte zu speichern ist. Gemäß dieser Ausführung erfolgt ein Vergleich zweier Umgebungskarten unterschiedlicher Bodenbearbeitungsgeräte vor einer Speicherung innerhalb der gemeinsamen Speichereinrichtung, um zu entscheiden, welche Umgebungskarte gespeichert wird. Gemäß einer weiteren Ausführung kann eine Umgebungskarte eines Bodenbearbeitungsgerätes auch mit einer bereits in der gemeinsamen Speichereinrichtung gespeicherten Umgebungskarte verglichen werden, wobei festgelegt wird, welche der Umgebungskarten in dem lokalen Speicher des Bodenbearbeitungsgerätes und/oder in der gemeinsamen Speichereinrichtung gespeichert wird. In Abhängigkeit von den definierten Auswahlkriterien kann beispielsweise entweder die lokale Umgebungskarte des Bodenbearbeitungsgerätes innerhalb des lokalen Speichers beibehalten werden, oder die in der gemeinsamen Speichereinrichtung gespeicherte Umgebungskarte übernommen werden, wobei in dem letztgenannten Fall die in der gemeinsamen Speichereinrichtung gespeicherte Umgebungskarte in den lokalen Speicher des Bodenbearbeitungsgerätes kopiert wird und somit die bisherige lokale Umgebungskarte des Bodenbearbeitungsgerätes überschrieben wird. Entsprechendes gilt für die Auswahl der in der gemeinsamen Speichereinrichtung zu speichernden Umgebungskarte.

Die Kommunikation zwischen dem Bodenbearbeitungsgerät und der gemeinsamen Speichereinrichtung des Systems kann vorzugsweise drahtlos erfolgen. Insbesondere empfiehlt sich eine Funkkommunikation wie beispielsweise mittels WLAN, Bluetooth und/oder ZigBee. Die der gemeinsamen Speichereinrichtung zugeordnete Recheneinrichtung vergleicht die Umgebungskarten der Bodenbearbeitungsgeräte und/oder der gemeinsamen Speichereinrichtung miteinander. Jedes der sich selbsttätig fortbewegenden Bodenbearbeitungsgeräte erstellt während seiner Fortbewegung durch die Umgebung eine Umgebungskarte, welche dann in Abhängigkeit von dem einen oder auch mehreren definierten Auswahlkriterien entweder durch eine in der gemeinsamen Speichereinrichtung gespeicherte Umgebungskarte ersetzt werden kann, oder die in der gemeinsamen Speichereinrichtung gespeicherte Umgebungskarte ersetzt. Ebenso dient die gemeinsame Speichereinrichtung für einen Abgleich der in zwei oder mehr Bodenbearbeitungsgeräten gespeicherten Umgebungskarten, so dass die Bodenbearbeitungsgeräte auf die gleiche Umgebungskarte zugreifen und während ihres Betriebs die gleichen Informationen über die Umgebung haben. Insbesondere können beide Bodenbearbeitungsgeräte ihre zunächst selbst erstellte Umgebungskarte an die gemeinsame Speichereinrichtung übermitteln, woraufhin die Recheneinrichtung die beiden Umgebungskarten vergleicht und anhand eines oder mehrerer definierter Auswahlkriterien entscheidet, welche Umgebungskarte innerhalb der gemeinsamen Speichereinrichtung gespeichert wird und ebenfalls auch von demjenigen Bodenbearbeitungsgerät übernommen wird, welches zuvor eine abweichende Umgebungskarte erstellt hat. Vorteilhaft ist in der gemeinsamen Speichereinrichtung eine für alle Bodenbearbeitungsgeräte des Systems bestimmte Umgebungskarte gespeichert, welche gegebenenfalls durch zumindest eines der Bodenbearbeitungsgeräte aktualisiert wird, je nach dem anzuwendenden Auswahlkriterium. Die gespeicherte Umgebungskarte wird aktualisiert, falls eines der Bodenbearbeitungsgeräte eine Umgebungskarte aufweist, welche gemessen an den definierten Auswahlkriterien eine vorteilhaftere Kartenversion aufweist als die bisher gespeicherte Umgebungskarte.

Des Weiteren wird vorgeschlagen, dass die gemeinsame Speichereinrichtung eine in eines der Bodenbearbeitungsgeräte integrierte Speichereinrichtung ist. Die gemeinsame Speichereinrichtung kann somit eine lokale Speichereinrichtung eines der Bodenbearbeitungsgeräte sein. Obwohl die gemeinsame Speichereinrichtung dadurch in das Bodenbearbeitungsgerät integriert, d. h. eingebaut, ist, greifen die anderen Bodenbearbeitungsgeräte des Systems gleichberechtigt auf die gemeinsame Speichereinrichtung zu. Vorteilhaft ist dabei, dass keine separate gemeinsame Speichereinrichtung benötigt wird.

Alternativ kann vorgesehen sein, dass die gemeinsame Speichereinrichtung eine Speichereinrichtung einer separat zu den Bodenbearbeitungsgeräten ausgebildeten Basisstation ist. Insbesondere empfiehlt es sich, dass diese Basisstation auch zum Ausführen einer Serviceaufgabe an zumindest einem der Bodenbearbeitungsgeräte ausgebildet ist. Die Basisstation kann entweder nur dem Zweck dienen, die gemeinsame Umgebungskarte für die Bodenbearbeitungsgeräte bereitzuhalten bzw. die Recheneinrichtung zur Verfügung zu stellen, welche den Abgleich zwischen verschiedenen Umgebungskarten der Bodenbearbeitungsgeräte und/oder der gemeinsamen Speichereinrichtung durchführt, oder zusätzlich eine Serviceaufgabe für eines oder bevorzugt alle Bodenbearbeitungsgeräte ausführen. Insbesondere kann die Basisstation eine Ladeeinrichtung aufweisen, welche einen Akkumulator des Bodenbearbeitungsgerätes aufladen kann, eine Saugeinrichtung, welche einen Sauggutsammelbehälter des Bodenbearbeitungsgerätes entleeren kann, oder dergleichen. Vorzugsweise kann das Bodenbearbeitungsgerät an der Basisstation andocken, wobei insbesondere eine mechanische Verbindung und eine Datenkommunikationsverbindung hergestellt werden. Die die gemeinsame Speichereinrichtung aufweisende Basisstation dient dann als ein externer Speicher, welcher Daten speichern kann und von welchem Daten abgerufen werden können. Die Basisstation dient somit als externer Speicher, wie beispielsweise ein externer USB-Stick oder dergleichen. Grundsätzlich kann die Datenübertragung zwischen einem Bodenbearbeitungsgerät und der Basisstation ausschließlich durch eine drahtlose Kommunikation erfolgen, wobei das Bodenbearbeitungsgerät nicht an der Basisstation andockt.

Des Weiteren wird vorgeschlagen, dass ein weiteres Auswahlkriterium ein Erstellungszeitpunkt der Umgebungskarte und/ oder ein Parameter einer für die Aufnahme der Umgebungsdaten verwendeten Detektionseinrichtung und/oder einer Steuereinrichtung des Bodenbearbeitungsgerätes ist. Die Entscheidung für eine von mehreren Umgebungskarten als gemeinsame Umgebungskarte kann somit beispielsweise nach der Regel erfolgen, dass immer eine Umgebungskarte neuesten Datums über ältere Umgebungskarten geschrieben werden. Alternative Regeln können beispielsweise beinhalten, immer eine Umgebungskarte eines Bodenbearbeitungsgerätes als gemeinsame Umgebungskarte zu speichern, welche mit einer qualitativ hochwertigeren Sensorik und/oder Steuerungselektronik erstellt wurde. Ein relevanter Parameter einer für die Aufnahme der Umgebungsdaten der Umgebungskarte verwendeten Detektionseinrichtung kann beispielsweise eine Auflösung, ein Kontrast, eine Art des Sensors, beispielsweise als Bilderfassungseinrichtung oder Abstandsmesseinrichtung, eine Farbsensitivität der Detektionseinrichtung oder dergleichen sein. Des Weiteren kann auch die Art und/oder Qualität einer Steuereinrichtung des Bodenbearbeitungsgerätes ein Auswahlkriterium sein. Die Steuereinrichtung des Bodenbearbeitungsgerätes weist eine Steuerungselektronik auf, welche das Bodenbearbeitungsgerät innerhalb der Umgebung steuert. Durch die Auswahlkriterien bei dem Vergleich der Umgebungskarten wird sichergestellt, dass jeweils eine bestmögliche Umgebungskarte von allen Bodenbearbeitungsgeräten des Systems verwendet wird und diese auch in der gemeinsamen Speichereinrichtung für die Bodenbearbeitungsgeräte zur Verfügung gestellt wird.

Neben dem zuvor beschriebenen System wird mit der Erfindung des Weiteren auch ein zum Betrieb eines Systems mit mindestens zwei sich selbsttätig fortbewegenden Bodenbearbeitungsgeräten vorgeschlagen, wobei eine Detektionseinrichtung Umgebungsdaten innerhalb der Umgebung des Bodenbearbeitungsgerätes aufnimmt, wobei eine Navigations- und Selbstlokalisierungseinrichtung des Bodenbearbeitungsgerätes eine Umgebungskarte aus den Umgebungsdaten erstellt, wobei eine Umgebungskarte der Bodenbearbeitungsgeräte in einer gemeinsamen Speichereinrichtung des Systems gespeichert wird, wobei eine Recheneinrichtung eine Umgebungskarte eines ersten Bodenbearbeitungsgerätes mit einer Umgebungskarte eines zweiten Bodenbearbeitungsgerätes und/oder mit einer in der gemeinsamen Speichereinrichtung gespeicherten Umgebungskarte vergleicht und anhand eines definierten Auswahlkriteriums festlegt, welche der Umgebungskarten in der gemeinsamen Speichereinrichtung und/oder in einem lokalen Speicher eines Bodenbearbeitungsgerätes gespeichert wird, wobei als Auswahlkriterium eine Detailtiefe der Umgebungskarten vergleichen wird, nämlich eine Dimension der Umgebungskarten und/oder eine Darstellung der Umgebung mit einer Angabe einer Höhe durch farbliche Codierung. Die damit erreichten Vorteile sowie auch die Merkmale des Verfahrens ergeben sich dabei wie zuvor in Bezug auf die Funktionsweise des erfindungsgemäßen Systems beschrieben.

Insbesondere wird vorgeschlagen, dass eine in der gemeinsamen Speichereinrichtung gespeicherte Umgebungskarte zumindest teilweise durch eine Umgebungskarte eines der Bodenbearbeitungsgeräte überschrieben wird und/oder eine in einem der Bodenbearbeitungsgeräte gespeicherte Umgebungskarte zumindest teilweise durch eine in der gemeinsamen Speichereinrichtung gespeicherte Umgebungskarte überschrieben wird. Ein Kartenabgleich kann beispielsweise dann erfolgen, wenn ein Bodenbearbeitungsgerät eine von diesem erstellte Umgebungskarte an die gemeinsame Speichereinrichtung überträgt, in welcher bereits eine Umgebungskarte, beispielsweise mit früherem Datum, gespeichert ist. Die Recheneinrichtung vergleicht die beiden Umgebungskarten miteinander und überschreibt die in der gemeinsamen Speichereinrichtung gespeicherte Umgebungskarte durch die Umgebungskarte des Bodenbearbeitungsgerätes, wenn das definierte Auswahlkriterium diese Folge festlegt. Die Umgebungskarte der gemeinsamen Speichereinrichtung wird dann entweder vollständig ersetzt oder nur teilweise überschrieben, nämlich gegebenenfalls nur in Bezug auf diejenigen Teile der Umgebungskarte, welche sich in den beiden Umgebungskarten unterscheiden. Des Weiteren kann eine eigene Umgebungskarte eines Bodenbearbeitungsgerätes überschrieben werden, zumindest teilweise, wenn eine in der gemeinsamen Speichereinrichtung gespeicherte Umgebungskarte die definierten Auswahlkriterien des Vergleichs besser erfüllt, d. h. eine größere Detailtiefe aufweist. In diesem Fall kommt es bei einem Datenabgleich einer lokalen Karte des Bodenbearbeitungsgerätes mit der in der gemeinsamen Speichereinrichtung gespeicherten Umgebungskarte zu einer Übernahme der gemeinsamen Umgebungskarte durch das Bodenbearbeitungsgerät.

Es wird vorgeschlagen, dass die Umgebungskarten der Bodenbearbeitungsgeräte und/oder der gemeinsamen Speichereinrichtung während einer Betriebspause des Bodenbearbeitungsgerätes oder der Bodenbearbeitungsgeräte verglichen werden. Sofern ein Vergleich zwischen einer Umgebungskarte eines Bodenbearbeitungsgerätes und einer Umgebungskarte der gemeinsamen Speichereinrichtung durchgeführt wird, empfiehlt es sich, dass das Bodenbearbeitungsgerät derzeit keine andere Aufgabe wahrnimmt. Andere Bodenbearbeitungsgeräte des Systems können stattdessen weiterbetrieben werden. Sofern die Umgebungskarten mehrerer Bodenbearbeitungsgeräte miteinander verglichen werden, nämlich unter Beteiligung der gemeinsamen Speichereinrichtung bzw. deren Recheneinrichtung, empfiehlt es sich, dass beide Bodenbearbeitungsgeräte ruhen. Die Betriebspause des Bodenbearbeitungsgerätes ermöglicht ein Stoppen eines Navigations- und Selbstlokalisierungsprogramms des Bodenbearbeitungsgerätes, welches während einer Fortbewegung des Bodenbearbeitungsgerätes ansonsten üblicherweise fortwährend eine Aktualisierung der Umgebungskarte durchführt, beispielsweise im Rahmen eines Slam-Verfahrens.

Des Weiteren wird vorgeschlagen, dass als Auswahlkriterium ein weiterer Parameter der Umgebungskarten verglichen wird. Insbesondere kann es sich bei dem Auswahlkriterium, welches über die Auswahl einer Umgebungskarte entscheidet, um einen Parameter der Umgebungskarten wie zum Beispiel einen Erstellungszeitpunkt, und/oder einen Parameter einer für die Aufnahme der Messdaten verwendeten Detektionseinrichtung und/oder einer Steuereinrichtung des Bodenbearbeitungsgerätes handeln. Beim Vergleich der Umgebungskarten wird ein oder werden mehrere Auswahlkriterien angewandt, welche die Umgebungskarten der Bodenbearbeitungsgeräte und/oder der gemeinsamen Speichereinrichtung voneinander unterscheiden, wobei jeweils eine solche Umgebungskarte als gemeinsame Umgebungskarte festgelegt wird, welche zum Beispiel eine neueste Version bzw. einen späteren Erstellungszeitpunkt aufweist. Des Weiteren sind grundsätzlich auch andere Auswahlkriterien anwendbar. Für die Anwendung der Auswahlkriterien wird auf die vorhergehende Beschreibung zu der Funktionsweise des Systems verwiesen.

Des Weiteren wird vorgeschlagen, dass die Umgebungskarte in einer Speichereinrichtung einer separat zu den Bodenbearbeitungsgeräten ausgebildeten Basisstation gespeichert wird und/oder aus einer Speichereinrichtung einer separat zu den Bodenbearbeitungsgeräten ausgebildeten Basisstation übernommen wird. Die gemeinsame Speichereinrichtung ist beispielsweise Teil einer Basisstation, welche vorzugsweise neben der reinen Speichertätigkeit auch eine Serviceaufgabe an dem Bodenbearbeitungsgerät wahrnehmen kann, beispielsweise einen Akkumulator des Bodenbearbeitungsgerätes auflädt, einen Sauggutsammelbehälter ausleert oder dergleichen. Das Bodenbearbeitungsgerät dockt vorzugsweise mechanisch an der Basisstation an und stellt eine Kommunikationsverbindung zwischen seiner lokalem Speicher und der gemeinsamen Speichereinrichtung der Basisstation her, so dass entweder eine Umgebungskarte des Bodenbearbeitungsgerätes in der gemeinsamen Speichereinrichtung gespeichert wird oder eine Umgebungskarte aus der gemeinsamen Speichereinrichtung der Basisstation in den lokalen Speicher des Bodenbearbeitungsgerätes geladen wird. Dabei wird die Umgebungskarte vorzugsweise nicht aus der gemeinsamen Speichereinrichtung entfernt. Vielmehr wird eine Kopie der Umgebungskarte erstellt.

Schließlich wird vorgeschlagen, dass die Umgebungskarte zu einem Zeitpunkt gespeichert, entnommen oder kopiert wird, zu welchem das Bodenbearbeitungsgerät zum Ausführen einer Serviceaufgabe mit der Basisstation verbunden ist. Dies ist insbesondere vorteilhaft, da sich das Bodenbearbeitungsgerät während des angedockten Zustandes an der Basisstation nicht relativ zu Umgebung bewegt und somit auch die Navigations- und Selbstlokalisierungseinrichtung nicht aktiv ist, die die Umgebungskarte fortwährend abgleicht bzw. aktualisiert. Somit kann an der Basisstation gleichzeitig in einer Betriebspause eine Serviceaufgabe an dem Bodenbearbeitungsgerät ausgeführt werden, beispielsweise ein Aufladen eines Akkumulators, und eine Übertragung einer Umgebungskarte erfolgen.

### Kurze Beschreibung der Zeichnungen

Im Folgenden wird die Erfindung anhand von Ausführungsbeispielen näher erläutert. Es zeigen:
- Fig. 1: ein System mit zwei sich selbsttätig fortbewegenden Bodenbe-arbeitungsgeräten und einer separat dazu ausgebildeten gemeinsamen Speichereinrichtung,
- Fig. 2: ein System mit zwei sich selbsttätig fortbewegenden Bodenbe-arbeitungsgeräten und einer in eines der Bodenbearbeitungsgeräte integrierten gemeinsamen Speichereinrichtung.

### Beschreibung der Ausführungsformen

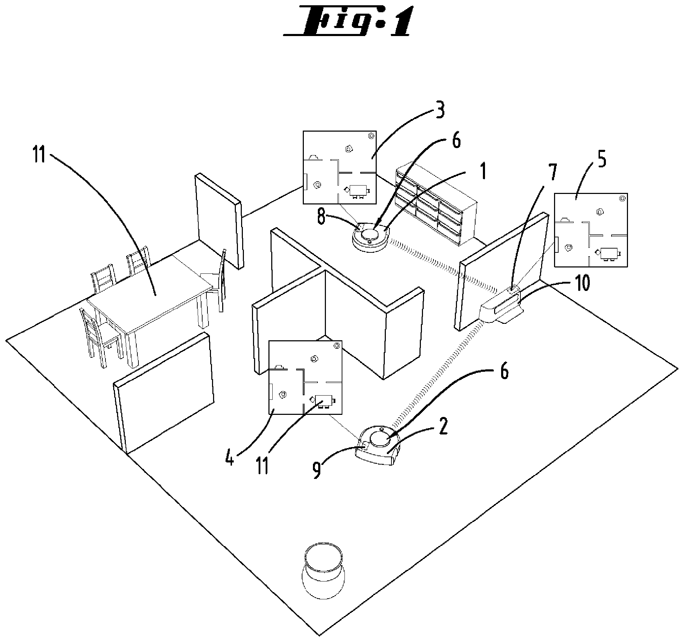

Figur 1 zeigt eine Umgebung, nämlich einen Teilbereich einer Wohnung mit mehreren Räumen. In den Räumen ist eine Vielzahl von Hindernissen 11 angeordnet, wie beispielsweise Möbelstücke und Raumbegrenzungen. In der Umgebung befindet sich ein System aus hier zwei sich selbsttätig fortbewegenden Bodenbearbeitungsgeräten 1, 2 sowie einer Basisstation 10 mit einer gemeinsamen Speichereinrichtung 7. Die Basisstation 10 ist eine Serviceeinrichtung, mit welcher sich jedes der Bodenbearbeitungsgeräte 1, 2 mechanisch und in Bezug auf eine Datenkommunikation verbinden kann. Die Basisstation 10 weist eine Ladeeinrichtung auf, mittels welcher ein Akkumulator der Bodenbearbeitungsgeräte 1, 2 aufgeladen werden kann. Die gemeinsame Speichereinrichtung 7 der Basisstation 10 dient zur Speicherung einer Umgebungskarte 5 der dargestellten Umgebung.

Die Bodenbearbeitungsgeräte 1, 2 weisen jeweils einen lokalen Speicher 8, 9 auf, in welchem ebenfalls jeweils eine Umgebungskarte 3, 4 der Umgebung gespeichert ist. Die Bodenbearbeitungsgeräte 1, 2 sind hier beispielsweise ein Saugroboter und ein Wischroboter. Die Bodenbearbeitungsgeräte 1, 2 verfügen über motorisch angetriebene Räder, mit deren Hilfe sich das Bodenbearbeitungsgerät 1, 2 innerhalb der Umgebung fortbewegen kann. Des Weiteren weisen die Bodenbearbeitungsgeräte 1, 2 Reinigungselemente (nicht dargestellt) auf, nämlich beispielsweise eine Seitenbürste, eine Borstenwalze und/oder eine Wischwalze, welche mit einem Wischtuch überzogen ist. Die Reinigungselemente dienen der Einwirkung auf eine zu reinigende Fläche. Weiter weist ein als Saugroboter ausgebildetes Bodenbearbeitungsgerät 1, 2 eine nicht weiter dargestellte Saugmundöffnung auf, über welche mittels einer Motor-Gebläse-Einheit mit Sauggut beaufschlagte Luft in das Bodenbearbeitungsgerät 1, 2 eingesaugt werden kann. Ein als Wischgerät ausgebildetes Bodenbearbeitungsgerät 1, 2 verfügt beispielsweise über eine Flüssigkeitsauftragseinrichtung und einen Flüssigkeitstank, aus welchem Flüssigkeit mittels der Flüssigkeitsauftragseinrichtung auf das Reinigungselement und/oder die zu reinigende Fläche abgegeben werden kann. Für die Elektroversorgung der einzelnen Elektrokomponenten der Bodenbearbeitungsgeräte 1, 2, wie für den Antrieb der Räder, der Reinigungselemente und weiter vorgesehene Elektronik weisen die Bodenbearbeitungsgeräte 1, 2 jeweils einen nicht dargestellten, wieder aufladbaren Akkumulator auf.

Die Bodenbearbeitungsgeräte 1, 2 sind des Weiteren jeweils mit einer Detektionseinrichtung 6 ausgestattet, welche hier beispielsweise eine Triangulationsmesseinrichtung aufweist. Die Detektionseinrichtung 6 misst Abstände zu den Hindernissen 11 innerhalb der Umgebung. Die Detektionseinrichtung 6 weist im Einzelnen jeweils eine Laserdiode auf, deren emittierter Lichtstrahl über eine Umlenkeinrichtung aus einem Gehäuse des Bodenbearbeitungsgerätes 1, 2 herausgeführt und um eine in der gezeigten Orientierung des Bodenbearbeitungsgerätes 1, 2 senkrecht stehende Drehachse rotierbar ist, insbesondere innerhalb eines Winkelbereiches von 360 Grad. Dadurch ist eine Rundum-Abstandsmessung um das Bodenbearbeitungsgerät 1, 2 möglich. Mit Hilfe der Detektionseinrichtung 6 kann die Umgebung in einer bevorzugt horizontalen Ebene vermessen werden, d. h. in einer zu der zu reinigenden Fläche parallelen Ebene. Dadurch kann das Bodenbearbeitungsgerät 1, 2 unter Vermeidung einer Kollision mit den Hindernissen 11 in der Umgebung verfahren. Die mittels der Detektionseinrichtung 6 aufgenommenen Umgebungsdaten, welche Abstände zu den Hindernissen 11 darstellen, werden zur Erstellung einer Umgebungskarte 3, 4 der Umgebung genutzt. Des Weiteren kann das Bodenbearbeitungsgerät 1, 2 beispielsweise einen nicht dargestellten Odometrie-Sensor aufweisen, welcher eine von dem jeweiligen Bodenbearbeitungsgerät 1, 2 zurückgelegte Wegstrecke misst. Des Weiteren ist es auch möglich, dass ein Bodenbearbeitungsgerät 1, 2 beispielsweise einen Kontaktsensor oder dergleichen aufweist.

Die Bodenbearbeitungsgeräte 1, 2 verfügen des Weiteren über jeweils einen lokalen Speicher 8, 9, welcher zur Speicherung einer von dem jeweiligen Bodenbearbeitungsgerät 1, 2 erstellten Umgebungskarte 3, 4 dient. Das Bodenbearbeitungsgerät 1, 2 befindet sich in der Darstellung gemäß Figur 1 in Kommunikationsverbindung mit der gemeinsamen Speichereinrichtung 7 bzw. der Basisstation 10. Die Kommunikationsverbindung ist hier beispielsweise eine WLAN-Verbindung.

Die Erfindung gemäß dieser Ausführungsform erfolgt beispielsweise so, dass das Bodenbearbeitungsgerät 1 innerhalb der Umgebung umherfährt und dabei eine Umgebungskarte 3 aus den von der Detektionseinrichtung 6 gemessenen Umgebungsdaten erstellt. Vorzugsweise während einer Betriebspause, d. h. während einer Nichtfortbewegung, verbindet sich das Bodenbearbeitungsgerät 1 mittels eines WLAN-Kommunikationsmoduls mit einem entsprechenden WLAN-Kommunikationsmodul der Basisstation 10. Alternativ kann das Bodenbearbeitungsgerät 1 auch zu der Basisstation 10 hinfahren, dort mechanisch andocken und eine drahtgebundene Kommunikationsverbindung zu der gemeinsamen Speichereinrichtung 7 der Basisstation 10 herstellen. Sofern sich in der gemeinsamen Speichereinrichtung 7 noch keine Umgebungskarte 5 befindet, wird die Umgebungskarte 3 des Bodenbearbeitungsgerätes 1 in die gemeinsame Speichereinrichtung 7 hineinkopiert. Diese neue Umgebungskarte 5 der gemeinsamen Speichereinrichtung 7 kann dann beispielsweise von dem anderen Bodenbearbeitungsgerät 2 des Systems übernommen werden. Sofern sich bereits eine Umgebungskarte 5 innerhalb der gemeinsamen Speichereinrichtung 7 befindet, wenn sich das Bodenbearbeitungsgerät 1 mit der Basisstation 10 verbindet, werden die beiden Umgebungskarten 3, 5, d. h. einerseits die Umgebungskarte 3 des Bodenbearbeitungsgerätes 1 und andererseits die Umgebungskarte 5 der gemeinsamen Speichereinrichtung 7, miteinander verglichen und in Bezug auf definierte Auswahlkriterien miteinander verglichen, um zu entscheiden, welche der Umgebungskarten 3, 5 innerhalb des lokalen Speichers 8 des Bodenbearbeitungsgerätes 1 und/oder innerhalb der gemeinsamen Speichereinrichtung 7 der Basisstation 10 gespeichert wird. Das Auswahlkriterium ist hier beispielsweise ein Erstellungsdatum der Umgebungskarten 3, 5. Sofern bei dem Vergleich festgestellt wird, dass die Umgebungskarte 3 des Bodenbearbeitungsgerätes 1 jünger ist als die in der gemeinsamen Speichereinrichtung 7 bereits gespeicherte Umgebungskarte 5, wird die Umgebungskarte 5 durch die Umgebungskarte 3 ersetzt. Dabei kann die Umgebungskarte 5 entweder vollständig ersetzt werden oder nur in Bezug auf solche Teile der Umgebungskarte 5, welche von der Umgebungskarte 3 des Bodenbearbeitungsgerätes 1 abweichen. Neben dem Auswahlkriterium Erstellungszeitpunkt können bei dem Vergleich der Umgebungskarten 3, 5 auch andere Auswahlkriterien zur Anwendung kommen. Diese Auswahlkriterien können beispielsweise eine Detailtiefe der jeweiligen Umgebungskarte 3, 5 sein oder auch ein Parameter der zur Aufnahme der Umgebungsdaten verwendeten Detektionseinrichtung 6 und/oder ein Parameter einer Steuereinrichtung des Bodenbearbeitungsgerätes 1.

Sofern sich anschließend das weitere Bodenbearbeitungsgerät 2 mit der Basisstation 10 bzw. der gemeinsamen Speichereinrichtung 7 des Systems verbindet, kann die nunmehr darin gespeicherte neue Umgebungskarte 5, welche zuvor die eigene Umgebungskarte 3 des anderen Bodenbearbeitungsgerätes 1 war, mit der Umgebungskarte 4 des zweiten Bodenbearbeitungsgerätes 2 auf gleiche Art und Weise verglichen werden. Sofern dabei beispielsweise festgestellt wird, dass die innerhalb der gemeinsamen Speichereinrichtung 7 gespeicherte Umgebungskarte 5 zeitlich aktueller ist als die innerhalb des Bodenbearbeitungsgerätes 2 gespeicherte Umgebungskarte 4, kann die Umgebungskarte 5 von der gemeinsamen Speichereinrichtung 7 in den lokalen Speicher 9 des Bodenbearbeitungsgerätes 2 kopiert werden. Insgesamt ist somit ein Abgleich zwischen den Umgebungskarten 3, 4 der Bodenbearbeitungsgeräte 1, 2 und der Umgebungskarte 5 der gemeinsamen Speichereinrichtung 7 erfolgt, wodurch optimalerweise alle Bodenbearbeitungsgeräte 1, 2 des Systems sowie die gemeinsame Speichereinrichtung 7 über die gleiche Umgebungskarte 3, 4, 5 verfügen.

Gemäß einer etwas abgewandelten Ausführungsform der Erfindung ist es auch möglich, dass die beiden Bodenbearbeitungsgeräte 1, 2 ihre Umgebungskarten 3, 4 zunächst an die gemeinsame Speichereinrichtung 7 der Basisstation 10 übermitteln, wobei eine der gemeinsamen Speichereinrichtung 7 zugeordnete Recheneinrichtung zunächst die beiden Umgebungskarten 3, 4 der Bodenbearbeitungsgeräte 1, 2 miteinander vergleicht und dann anhand definierter Auswahlkriterien diejenige Umgebungskarte 3, 4 identifiziert, welche die Auswahlkriterien am besten erfüllt, hier beispielsweise zeitlich aktueller ist. Diese Umgebungskarte 3, 4 wird dann in der gemeinsamen Speichereinrichtung 7 gespeichert und ersetzt dort gegebenenfalls eine vorhandene Umgebungskarte 5.

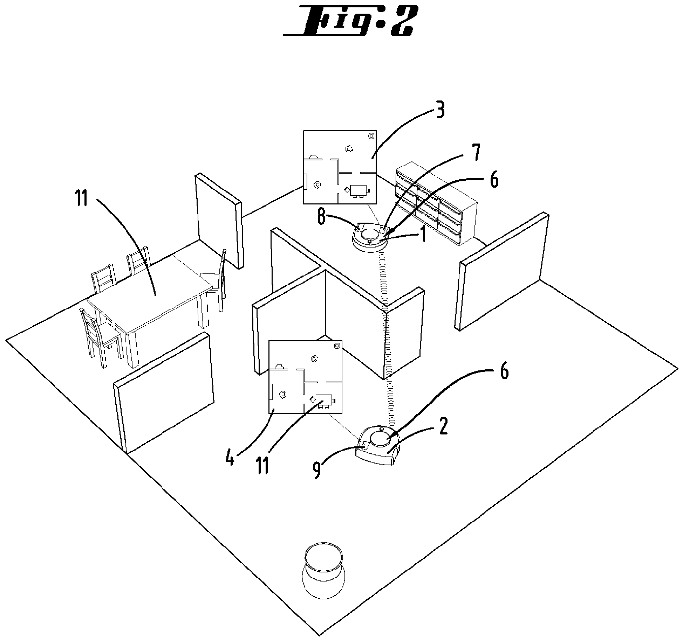

Figur 2 zeigt ein System aus zwei sich selbsttätig fortbewegenden Bodenbearbeitungsgeräten 1, 2. Die gemeinsame Speichereinrichtung 7 des Systems ist dabei in eines der Bodenbearbeitungsgeräte 1, 2 integriert, so dass das Bodenbearbeitungsgerät 1 einerseits einen lokalen Speicher 8 zur Speicherung einer selbst erstellten Umgebungskarte 3 und andererseits die gemeinsame Speichereinrichtung 7 aufweist, auf welche auch das andere Bodenbearbeitungsgerät 2 zugreifen kann. Obwohl die gemeinsame Speichereinrichtung 7 hier einem der Bodenbearbeitungsgeräte 1, 2 zugeordnet ist, nämlich in das Bodenbearbeitungsgerät 1 integriert ist, funktioniert die Erfindung gemäß dieser Ausführungsform in Bezug auf die Datenkommunikation wie zuvor in Bezug auf das System gemäß Figur 1 erläutert. Die Übertragung von Umgebungskarten 3, 4, 5 erfolgt hier beispielsweise mittels drahtloser Funkkommunikation, beispielsweise WLAN-Kommunikation. Ein Andocken des Bodenbearbeitungsgerätes 2 an dem Bodenbearbeitungsgerät 1 ist nicht vorgesehen. Allerdings empfiehlt es sich, dass die Bodenbearbeitungsgeräte 1, 2 während eines Abgleichs ihrer Umgebungskarten 3, 4, 5 ruhen, so dass die Umgebungskarten 3, 4, 5 während des Abgleichs nicht von einer Navigations- und Selbstlokalisierungseinrichtung aktualisiert bzw. verwendet werden.

### Liste der Bezugszeichen

- 1: Bodenbearbeitungsgerät
- 2: Bodenbearbeitungsgerät
- 3: Umgebungskarte
- 4: Umgebungskarte
- 5: Umgebungskarte
- 6: Detektionseinrichtung
- 7: Speichereinrichtung
- 8: Speicher
- 9: Speicher
- 10: Basisstation
- 11: Hindernis

## Patentansprüche

1. System mit mindestens zwei sich selbsttätig fortbewegenden Bodenbearbeitungsgeräten (1, 2), wobei jedes der Bodenbearbeitungsgeräte (1, 2) eine Navigations- und Selbstlokalisierungseinrichtung aufweist, welche eingerichtet ist, eine Umgebungskarte (3, 4, 5) anhand von mittels einer Detektionseinrichtung (6) aufgenommenen Umgebungsdaten der Umgebung des Bodenbearbeitungsgerätes (1, 2) zu erstellen, wobei den Bodenbearbeitungsgeräten (1, 2) eine gemeinsame Speichereinrichtung (7) zur Speicherung von Umgebungskarten und eine Recheneinrichtung zugeordnet sind, wobei die Recheneinrichtung ausgebildet ist, eine Umgebungskarte (3) eines ersten Bodenbearbeitungsgerätes (1) mit einer Umgebungskarte (4) eines zweiten Bodenbearbeitungsgerätes (2) und/oder mit einer in der gemeinsamen Speichereinrichtung (7) gespeicherten Umgebungskarte (5) zu vergleichen und anhand eines definierten Auswahlkriteriums festzulegen, welche der Umgebungskarten (3, 4, 5) in der gemeinsamen Speichereinrichtung (7) und/oder in einem lokalen Speicher (8, 9) eines Bodenbearbeitungsgerätes (1, 2) gespeichert wird, **dadurch gekennzeichnet, dass** das Auswahlkriterium eine Detailtiefe der Umgebungskarten (3, 4, 5) ist, nämlich eine zweidimensionale oder eine dreidimensionale Darstellung der Umgebungskarten (3, 4, 5) und/oder eine Darstellung der Umgebung mit einer Angabe einer Höhe durch farbliche Codierung.

2. System nach Anspruch 1, **dadurch gekennzeichnet, dass** die gemeinsame Speichereinrichtung (7) eine in eines der Bodenbearbeitungsgeräte (1, 2) integrierte Speichereinrichtung (7) ist.

3. System nach Anspruch 1, **dadurch gekennzeichnet, dass** die gemeinsame Speichereinrichtung (7) eine Speichereinrichtung (7) einer separat zu den Bodenbearbeitungsgeräten (1, 2) ausgebildeten Basisstation (10) ist, insbesondere einer Basisstation (10), welche zum Ausführen einer Serviceaufgabe an zumindest einem der Bodenbearbeitungsgeräte (1, 2) ausgebildet ist.

4. System nach einem der vorhergehenden Ansprüche, **dadurch gekennzeichnet, dass** ein zusätzliches Auswahlkriterium ein Erstellungszeitpunkt der Umgebungskarte (3, 4, 5), und/oder ein Parameter einer für die Aufnahme der Umgebungsdaten verwendeten Detektionseinrichtung (6) und/oder einer Steuereinrichtung des Bodenbearbeitungsgerätes (1, 2), ist.

5. Verfahren zum Betrieb eines Systems mit mindestens zwei sich selbsttätig fortbewegenden Bodenbearbeitungsgeräten (1, 2), wobei eine Detektionseinrichtung (6) Umgebungsdaten innerhalb der Umgebung des Bodenbearbeitungsgerätes (1, 2) aufnimmt, wobei eine Navigations- und Selbstlokalisierungseinrichtung des Bodenbearbeitungsgerätes (1, 2) eine Umgebungskarte (3, 4, 5) aus den Umgebungsdaten erstellt, wobei eine Umgebungskarte (3, 4, 5) der Bodenbearbeitungsgeräte (1, 2) in einer gemeinsamen Speichereinrichtung (7) des Systems gespeichert wird, wobei eine Recheneinrichtung eine Umgebungskarte (3) eines ersten Bodenbearbeitungsgerätes (1) mit einer Umgebungskarte (4) eines zweiten Bodenbearbeitungsgerätes (2) und/oder mit einer in der gemeinsamen Speichereinrichtung (7) gespeicherten Umgebungskarte (5) vergleicht und anhand eines definierten Auswahlkriteriums festlegt, welche der Umgebungskarten (3, 4, 5) in der gemeinsamen Speichereinrichtung (7) und/oder in einem lokalen Speicher eines Bodenbearbeitungsgerätes (1, 2) gespeichert wird, **dadurch gekennzeichnet, dass** als Auswahlkriterium eine Detailtiefe der Umgebungskarte (3, 4, 5) verglichen wird, nämlich eine zweidimensionale oder eine dreidimensionale Darstellung der Umgebungskarten (3, 4, 5) und/oder eine Darstellung der Umgebung mit einer Angabe einer Höhe durch farbliche Codierung.

6. Verfahren nach Anspruch 5, **dadurch gekennzeichnet, dass** eine in der gemeinsamen Speichereinrichtung (7) gespeicherte Umgebungskarte (5) zumindest teilweise durch eine Umgebungskarte (3, 4) eines der Bodenbearbeitungsgeräte (1, 2) überschrieben wird und/oder eine in einem der Bodenbearbeitungsgeräte (1, 2) gespeicherte Umgebungskarte (3, 4) zumindest teilweise durch eine in der gemeinsamen Speichereinrichtung (7) gespeicherte Umgebungskarte (5) überschrieben wird.

7. Verfahren nach Anspruch 5 oder 6, **dadurch gekennzeichnet, dass** die Umgebungskarten (3, 4, 5) der Bodenbearbeitungsgeräte (1, 2) und/oder der gemeinsamen Speichereinrichtung (7) während einer Betriebspause des Bodenbearbeitungsgerätes (1, 2) oder der Bodenbearbeitungsgeräte (1, 2) verglichen werden.

8. Verfahren nach einem der Ansprüche 5 bis 7, **dadurch gekennzeichnet, dass** als ein zusätzliches Auswahlkriterium ein Erstellungszeitpunkt der Umgebungskarten (3, 4, 5), und/oder ein Parameter einer für die Aufnahme der Umgebungsdaten verwendeten Detektionseinrichtung (6) und/oder einer Steuereinrichtung des Bodenbearbeitungsgerätes (1, 2), verglichen wird.

9. Verfahren nach einem der Ansprüche 5 bis 8, **dadurch gekennzeichnet, dass** die Umgebungskarte (3, 4, 5) in einer Speichereinrichtung (7) einer separat zu den Bodenbearbeitungsgeräten (1, 2) ausgebildeten Basisstation (10) gespeichert wird und/oder aus einer Speichereinrichtung (7) einer separat zu den Bodenbearbeitungsgeräten (1, 2) ausgebildeten Basisstation (10) übernommen wird.

10. Verfahren nach Anspruch 9, **dadurch gekennzeichnet, dass** die Umgebungskarte (3, 4, 5) zu einem Zeitpunkt gespeichert, entnommen oder kopiert wird, zu welchem das Bodenbearbeitungsgerät (1, 2) zum Ausführen einer Serviceaufgabe mit der Basisstation (10) verbunden ist.

## Claims

1. System comprising at least two self-propelling floor treatment devices (1, 2), each of the floor treatment devices (1, 2) having a navigation and self-localisation apparatus which is configured to create a surroundings map (3, 4, 5) on the basis of surroundings data of the surroundings of the floor treatment device (1, 2), which data are captured by means of a detection apparatus (6), the floor treatment devices (1, 2) being associated with a common memory apparatus (7) for storing surroundings maps and with a computing apparatus, the computing apparatus being designed to compare a surroundings map (3) of a first floor treatment device (1) with a surroundings map (4) of a second floor treatment device (2) and/or with a surroundings map (5) stored in the common memory apparatus (7) and, on the basis of a defined selection criterion, to determine which of the surroundings maps (3, 4, 5) is to be stored in the common memory apparatus (7) and/or in a local memory (8, 9) of a floor treatment device (1, 2), **characterised in that** the selection criterion is a depth of detail of the surroundings maps (3, 4, 5), specifically a two-dimensional or a three-dimensional representation of the surroundings maps (3, 4, 5) and/or a representation of the surroundings that indicates height by means of colour coding.

2. System according to claim 1, **characterised in that** the common memory apparatus (7) is a memory apparatus (7) integrated in one of the floor treatment devices (1, 2).

3. System according to claim 1, **characterised in that** the common memory apparatus (7) is a memory apparatus (7) of a base station (10) which is separate from the floor treatment devices (1, 2), in particular a base station (10) which is designed to perform a service task on at least one of the floor treatment devices (1, 2).

4. System according to any of the preceding claims, **characterised in that** an additional selection criterion is a creation time of the surroundings map (3, 4, 5), and/or a parameter of a detection apparatus (6) used for capturing the surroundings data and/or a control apparatus of the floor treatment device (1, 2).

5. Method for operating a system comprising at least two self-propelling floor treatment devices (1, 2), a detection apparatus (6) capturing surroundings data within the surroundings of the floor treatment device (1, 2), a navigation and self-localisation apparatus of the floor treatment device (1, 2) creating a surroundings map (3, 4, 5) from the surroundings data, a surroundings map (3, 4, 5) of the floor treatment devices (1, 2) being stored in a common memory apparatus (7) of the system, a computing apparatus comparing a surroundings map (3) of a first floor treatment device (1) with a surroundings map (4) of a second floor treatment device (2) and/or with a surroundings map (5) stored in the common memory apparatus (7) and, on the basis of a defined selection criterion, determining which of the surroundings maps (3, 4, 5) is to be stored in the common memory apparatus (7) and/or in a local memory of a floor treatment device (1, 2), **characterised in that**, as the selection criterion, a depth of detail of the surroundings maps (3, 4, 5) is compared, specifically a two-dimensional or a three-dimensional representation of the surroundings maps (3, 4, 5) and/or a representation of the surroundings that indicates height by means of colour coding.

6. Method according to claim 5, **characterised in that** a surroundings map (5) stored in the common memory apparatus (7) is at least partially overwritten by a surroundings map (3, 4) of one of the floor treatment devices (1, 2) and/or a surroundings map (3, 4) stored in one of the floor treatment devices (1, 2) is at least partially overwritten by a surroundings map (5) stored in the common memory apparatus (7).

7. Method according to either claim 5 or claim 6, **characterised in that** the surroundings maps (3, 4, 5) of the floor treatment devices (1, 2) and/or the common memory apparatus (7) are compared during a pause in operation of the floor treatment device (1, 2) or the floor treatment devices (1, 2).

8. Method according to any of claims 5 to 7, **characterised in that** a creation time of the surroundings maps (3, 4, 5), and/or a parameter of a detection apparatus (6) used for capturing the surroundings data and/or of a control apparatus of the floor treatment device (1, 2), is compared as an additional selection criterion.

9. Method according to any of claims 5 to 8, **characterised in that** the surroundings map (3, 4, 5) is stored in a memory apparatus (7) of a base station (10) which is separate from the floor treatment devices (1, 2), and/or is retrieved from a memory apparatus (7) of a base station (10) which is separate from the floor treatment devices (1, 2).

10. Method according to claim 9, **characterised in that** the surroundings map (3, 4, 5) is stored, removed or copied at a point in time at which the floor treatment device (1, 2) is connected to the base station (10) in order to perform a service task.

## Revendications

1. Système avec au moins deux appareils de traitement du sol (1, 2) se déplaçant automatiquement, dans lequel chacun des appareils de traitement du sol (1, 2) comprend un dispositif de navigation et d'auto-localisation qui est conçu pour établir une carte d'environnement (3, 4, 5) sur la base de données d'environnement de l'environnement de l'appareil de traitement du sol (1, 2) enregistrées au moyen d'un dispositif de détection (6), dans lequel un dispositif de mémoire commun (7) pour le stockage de cartes d'environnement et un dispositif de calcul sont associés aux appareils de traitement du sol (1, 2), dans lequel le dispositif de calcul est conçu pour comparer une carte d'environnement (3) d'un premier appareil de traitement du sol (1) avec une carte d'environnement (4) d'un deuxième appareil de traitement du sol (2) et/ou avec une carte d'environnement (5) stockée dans le dispositif de mémoire commun (7) et déterminer, sur la base d'un critère de sélection défini, laquelle des cartes d'environnement (3, 4, 5) sera stockée dans le dispositif de mémoire commun (7) et/ou dans une mémoire locale (8, 9) d'un appareil de traitement du sol (1, 2), **caractérisé en ce que** le critère de sélection est un niveau de détail des cartes d'environnement (3, 4, 5), à savoir une représentation bidimensionnelle ou tridimensionnelle des cartes d'environnement (3, 4, 5) et/ou une représentation de l'environnement avec une indication d'une hauteur par un code de couleurs.

2. Système selon la revendication 1, **caractérisé en ce que** le dispositif de mémoire commun (7) est un dispositif de mémoire (7) intégré dans l'un des appareils de traitement du sol (1, 2).

3. Système selon la revendication 1, **caractérisé en ce que** le dispositif de mémoire commun (7) est un dispositif de mémoire (7) d'une station de base (10) formée séparément des appareils de traitement du sol (1, 2), en particulier une station de base (10) conçue pour effectuer une tâche de service sur au moins un desdits appareils de traitement du sol (1, 2).

4. Système selon l'une des revendications précédentes, **caractérisé en ce qu'**un critère de sélection supplémentaire est un moment de création de la carte d'environnement (3, 4, 5) et/ou un paramètre d'un dispositif de détection (6) utilisé pour l'enregistrement des données d'environnement et/ou un dispositif de commande de l'appareil de traitement du sol (1, 2).

5. Procédé de fonctionnement d'un système avec au moins deux appareils de traitement du sol (1, 2) se déplaçant automatiquement, dans lequel un dispositif de détection (6) enregistre des données d'environnement dans l'environnement de l'appareil de traitement du sol (1, 2), dans lequel un dispositif de navigation et d'auto-localisation de l'appareil de traitement du sol (1, 2) établit une carte d'environnement (3, 4, 5) à partir des données d'environnement, dans lequel une carte d'environnement (3, 4, 5) des appareils de traitement du sol (1, 2) est stockée dans un dispositif de mémoire commun (7) du système, dans lequel un dispositif de calcul compare une carte d'environnement (3) d'un premier appareil de traitement du sol (1) avec une carte d'environnement (4) d'un deuxième appareil de traitement du sol (2) et/ou avec une carte d'environnement (5) stockée dans le dispositif de mémoire commun (7) et détermine, sur la base d'un critère de sélection défini, laquelle des cartes d'environnement (3, 4, 5) sera stockée dans le dispositif de mémoire commun (7) et/ou dans une mémoire locale (8, 9) d'un appareil de traitement du sol (1, 2), **caractérisé en ce qu'**une profondeur de détail de la carte d'environnement (3, 4, 5) est comparée en tant que critère de sélection, à savoir une représentation bidimensionnelle ou tridimensionnelle des cartes d'environnement (3, 4, 5) et/ou une représentation de l'environnement avec une indication d'une hauteur par un code de couleurs.

6. Procédé selon la revendication 5, **caractérisé en ce qu'**une carte d'environnement (5) stockée dans le dispositif de mémoire commun (7) est au moins partiellement écrasée par une carte d'environnement (3, 4) de l'un des appareils de traitement du sol (1, 2) et/ou une carte d'environnement (3, 4) stockée dans l'un des appareils de traitement du sol (1, 2) est au moins partiellement écrasée par une carte d'environnement (5) stockée dans le dispositif de mémoire commun (7).

7. Procédé selon la revendication 5 ou 6, **caractérisé en ce que** les cartes d'environnement (3, 4, 5) des appareils de traitement du sol (1, 2) et/ou du dispositif de stockage commun (7) sont comparées pendant une pause de fonctionnement de l'appareil de traitement du sol (1, 2) ou des appareils de traitement du sol (1, 2).

8. Procédé selon l'une quelconque des revendications 5 à 7, **caractérisé en ce qu'**est comparé en tant que critère de sélection supplémentaire, un moment de création des cartes d'environnement (3, 4, 5), et/ou un paramètre d'un dispositif de détection (6) utilisé pour l'enregistrement des données d'environnement et/ou d'un dispositif de commande de l'appareil de traitement du sol (1, 2).

9. Procédé selon l'une quelconque des revendications 5 à 8, **caractérisé en ce que** la carte d'environnement (3, 4, 5) est stockée dans un dispositif de mémoire (7) d'une station de base (10) formée séparément des appareils de traitement du sol (1, 2) et/ou est transférée depuis un dispositif de stockage (7) d'une station de base (10) formée séparément des appareils de traitement du sol (1, 2) .

10. Procédé selon la revendication 9, **caractérisé en ce que** la carte d'environnement (3, 4, 5) est stockée, récupérée ou copiée à un moment où l'appareil de traitement du sol (1, 2) est relié à la station de base (10) pour effectuer une tâche de service.
